# EUROPÄISCHE PATENTSCHRIFT

(11) **EP 3 839 989 B1**
(45) Veröffentlichungstag und Bekanntmachung des Hinweises auf die Patenterteilung: **21.08.2024**
(21) Anmeldenummer: 19217934.9
(22) Anmeldetag: 19.12.2019
(51) Int. Cl.: H01F 27/24

(54) **LUFTDROSSELSPULE MIT TEMPERATURMESSSYSTEM**
AIR THROTTLING COIL WITH TEMPERATURE SENSING SYSTEM
BOBINE DE RÉDUCTEUR D'AIR POURVUE DE SYSTÈME DE MESURE DE LA TEMPÉRATURE

(43) Veröffentlichungstag der Anmeldung: 23.06.2021
(73) Patentinhaber: HSP Hochspannungsgeräte GmbH, 53842 Troisdorf (DE)
(72) Erfinder: Haiden, Martin, 4020 Linz (AT); Pointner, Klaus, 4040 Linz (AT)
(74) Vertreter: Betten & Resch

(56) Entgegenhaltungen:
- WO-A1-2015/080693
- DE-T5- 112013 005 274
- KR-A- 20100 063 549
- KR-B1- 101 979 631
- US-A1- 2009 015 239
- US-A1- 2009 115 426
- US-A1- 2009 278 651
- US-A1- 2010 114 392
- US-A1- 2017 199 229
- US-A1- 2018 048 187
- GRILO ANTONIO M ET AL: "An Integrated WSAN and SCADA System for Monitoring a Critical Infrastructure", IEEE TRANSACTIONS ON INDUSTRIAL INFORMATICS, IEEE SERVICE CENTER, NEW YORK, NY, US, vol. 10, no. 3, 1 August 2014 (2014-08-01), pages 1755 - 1764, XP011555951, ISSN: 1551-3203, [retrieved on 20140804], DOI: 10.1109/TII.2014.2322818
- MOGHE R ET AL: "A robust smart sensor for smart substations", 2012 IEEE POWER AND ENERGY SOCIETY GENERAL MEETING ; SAN DIEGO, CALIFORNIA, USA; 22 - 26 JULY 2012, IEEE, PISCATAWAY, NJ, 22 July 2012 (2012-07-22), pages 1 - 8, XP032465782, ISBN: 978-1-4673-2727-5, DOI: 10.1109/PESGM.2012.6345149

## Beschreibung

Luftdrosselspulen werden beispielsweise bei Hochspannungs-Gleichstrom-Übertragungsstrecken (HGÜ) als Glättungsdrossel eingesetzt.

Als wesentliche Elemente des Stromnetzes können sie im Rahmen der Netzleittechnik mittels SCADA - Systemen überwacht werden, um so den Betreiber bei der Betriebsführung des Netzes zu unterstützen, d. h. dem Betriebspersonal Entscheidungshilfen an die Hand zu geben und so weit wie möglich bei Routinearbeiten zu entlasten. Neben der Netzüberwachung muss auf sich ergebende Störsituationen reagiert und steuernd in das Netzgeschehen eingegriffen werden.

Als Alternative können Cloud-Computing Plattformen zur Überwachung der Luftdrosselspulen eingesetzt werden. Dabei werden üblicherweise die erfassten Daten über ein Mobilfunknetz (3GPP Mobilfunk Standards) an eine entsprechende Cloudanwendung gesendet und dort verarbeitet. Die Datenbereitstellung erfolgt über eine dazu zur Verfügung gestellte APP (Mobil als auch als Webseite). Das System liefert dabei lediglich Informationen, Warnungen und Alarme in Form von z.b. Push Nachrichten auf ein Mobiltelefon, triggert aber im Allgemeinen keine Schalthandlungen und interagiert nicht mit einem (geschlossenen) SCADA System.

Dazu werden wesentliche Parameter der Luftdrosselspulen mittels Messgeräten erfasst, an eine zentrale cloud basierte Datenbank übertragen und dort bedienergerecht aufbereitet und dargestellt.

Darüber hinaus können aus den Parametern mittels Simulationsmethoden Alterungsvorgänge bewertet und potentielle Ausfälle frühzeitig erkannt werden. Weiters kann dadurch von periodischen Wartungsintervallen auf zustandsbasierte Wartung umgestellt werden.

So ist es beispielsweise bekannt, dass die Lebensdauer der Wicklung von Spulen oder Transformatoren in erster Linie vom Zustand der Wicklungsisolation abhängig ist, die unter Wirkung der Betriebstemperatur eine Alterung erfährt.

Mit guter Annäherung gilt dabei für Feststoffisolationen basierend auf Polymeren die Gesetzmäßigkeit (Arrhenius), dass die Lebensdauer einer Isolation für 10°C Temperaturzunahme bezogen auf den heißesten Punkt, um jeweils etwa die Hälfte verkürzt wird.

Eine fortlaufende Überwachung der Temperatur kann daher die Grundlage für die Ermittlung der Alterungsgeschwindigkeit bzw. der Restlebensdauer der Spule bilden und den rechtzeitigen störungsfreien Austausch ermöglichen.

Darüber hinaus wird durch entsprechende Steuerungs- und Regelungseingriffe in das Netz die optimale Belastung des Bauteiles und damit die Erhöhung der Lebensdauer ermöglicht.

Bei der Erfassung der Parameter mittels Sensoren bei Bauteilen der Hochspannungstechnik stellen die elektrischen und elektromagnetischen Rahmenbedingungen eine besondere Herausforderung dar.

So befinden sich z.B. die Glättungsdrosseln von Hochspannungs-Gleichstrom-Übertragungsstrecken im Betrieb auf hohem elektrischem Potential gegenüber Erde, z.B. 500 bis 800 kV.

An die Verbindung der an den Glättungsdrosseln angebrachten Sensoren, die damit ebenfalls auf hohem elektrischen Potential liegen, mit auf Erdpotential liegenden Komponenten werden daher hohe Anforderungen gestellt.

Es ist beispielsweise bekannt, die Verbindung zu den Sensoren mit Glasfaserleitungen sowohl hinsichtlich der Energieversorgung als auch zur Kommunikation zu gestalten. Im Vergleich zu einer galvanischen Anschlussleitung wird das Problem einer zuverlässigen galvanischen Trennung zwischen den Leitungen des Sensorsystems und den Starkstromkomponenten zwar entschärft, jedoch müssen aufgrund möglicher Verschmutzungen und Feuchtigkeit an den Glasfaserleitungen trotzdem noch Maßnahmen zur Vergrößerung möglicher Kriechstrecken usw. getroffen werden. Diese zusätzlichen Maßnahmen können einen erhöhten Aufwand bei der Herstellung und Verkabelung der Sensoren und damit höhere Kosten verursachen.

Denkbar ist es auch, Funksensoren einzusetzen. Solche Funksensoren könnten mit Batterien mit langer Haltbarkeit, wie beispielsweise Lithium-Primärbatterien, ausgestattet werden.

Dies kann vor allem für Funksensoren eingesetzt werden, die nicht ständig, sondern nur gelegentlich Messdaten erfassen und übermitteln müssen, also im Mittel einen niedrigen Energiebedarf aufweisen. Nachteilig kann sich hier allerdings auswirken, dass der Austausch der Batterien, wenn auch in vergleichsweise großen Zeitabständen, einen beträchtlichen Wartungsaufwand bedeutet, wenn z.b. diese bei Glättungsdrosselspulen, welche auf Isolatoren von bis zu 15m Länge montiert sind, getauscht werden müssen. Oft sind die Sensoren im Bereich der Starkstromtechnik erhöhten Umgebungstemperaturen ausgesetzt, wodurch in diesem Bereich ein Einsatz von Batterien entweder gar nicht oder nur mit häufigem Austausch möglich ist.

Die WO 2015/080693 A1 beschreibt einen Sensor, der mit einem ferromagnetischen Band an einem Stromleiter befestigt wird. In der befestigten Stellung erstreckt sich das Band um den Stromleiter und durch eine Wicklung des Sensors Auf diese Weise entsteht ein Transformator, deren Primärwicklung der Stromleiter ist. Der magnetische Fluss des Stromleiters wird in dem ferromagnetischen Band gebündelt. Eine Veränderung des magnetischen Flusses induziert in der Sekundärwicklung eine Sekundärspannung, die einen Sekundärstrom treibt. Der Sekundärstrom wird mittels eines Gleichrichters in einen Gleichstrom umgerichtet, der schließlich zur Energieversorgung des Sensors verwendet wird.

Die US 2009/015239 A1 betrifft einen Sensor zur Überwachung einer Hochspannungsleitung.

In dem Beitrag von GRILO ANTONIO M ET AL: "An Integrated WSAN and SCADA System for Monitoring a Critical Infrastructure", IEEE TRANSACTIONS ON INDUSTRIAL INFORMATICS, IEEE SERVICE CENTER, NEW YORK, NY, US, Bd. 10, Nr. 3, 1. August 2014 (2014-08-01), Seiten 1755-1764, werden Sensoren für SCADA-Systeme vorgeschlagen, deren Daten ausgangsseitig kabellos übertragen werden.

Weiterer Stand der Technik ist aus der KR DE 11 2013 005274 T5 2010 0063549 A, US 2017/199229 A1, US 2010/114392 A1, US 2018/048187 A1, US 2009/115426 A1, US 2009/278651 A1 und DE 11 2013 005274 T5 bekannt.

Der Erfindung liegt daher die Aufgabe zugrunde, eine einfache und zuverlässige Methode zur Temperaturerfassung bei Geräten auf Hochspannungspotention (z.b. trockenisolierte Drosselspulen) anzugeben.

Erfindungsgemäß geschieht dies mit einer Luftdrosselspule gemäß Anspruch 1.

Vorteilhafte Ausgestaltungen ergeben sich aus den Unteransprüchen.

Es werden an einer Luftdrosselspule ein thermografischer Sensor und Mittel zur berührungslosen Datenübertragung befestigt und mittels Methoden des "Energy-Harvesting" aus dem elektromagnetischen Feld der Spule versorgt.

Als Energy Harvesting bzw. Energie-Ernten bezeichnet man die Gewinnung kleiner Mengen von elektrischer Energie aus Quellen wie Umgebungstemperatur, Vibrationen oder elektromagnetischen Feldern für mobile Geräte mit geringer Leistung.

Damit werden die Einschränkungen durch kabelgebundene bzw. glasfasergebundene Stromversorgung oder Batterien vermieden.

Als thermografischer Sensor ist vorzugsweise eine Wärmebildkamera bzw. Infrarotarray vorgesehen.

In vorteilhafter Weise ist der thermografische Sensor auf der Oberseite der Luftdrosselspule angeordnet und in das Innere der Luftdrosselspule gerichtet.

Eine vorteilhafte Ausgestaltung der Mittel zur Gewinnung elektrischer Energie aus dem elektromagnetischen Feld umfasst eine Spule, ein Gleichrichterelement und ein Speicherelement. Die Datenübertragung in günstiger Weise auf einem Funknetzstandard gemäß IEEE-802.11 beruhen oder auch Mobilfunkstdandards gemäß 3GPP.

Wenn das Temperaturmesssystem in ein SCADA-System oder ein cloud basiertes Datenbanksystem eingebunden ist, können auf Basis der ermittelten Infrarotbilder mittels geeigneter Methoden der künstlichen Intelligenz kritische Betriebszustände erkannt und Alarme generiert werden. Erfindungsgemäß werden mittels Simulation eine voraussichtliche Restlebensdauer der Luftdrosselspule und ein Vorschlag für einen Austauschtermin ermittelt.

Dadurch können ungeplante Unterbrechungen, Serviceeinsätze oder der Ausfall von Geräten und Anlagen verringert oder vermieden werden.

Vorteilhaft ist es ebenfalls, wenn die Daten der ermittelten Infrarotbilder in eine virtuelle, digitale Repräsentanz der Luftdrosselspule d.h. in einen sogenannten Digitalen Zwilling eingefügt werden.

Digitale Zwillinge ermöglichen einen übergreifenden Datenaustausch. Sie sind mehr als reine Daten und bestehen aus Modellen des repräsentierten Objekts und können daneben Simulationen, Algorithmen und Services enthalten, die Eigenschaften oder Verhalten des repräsentierten Objekts oder Prozesses beschreiben, beeinflussen, oder Dienste darüber anbieten.

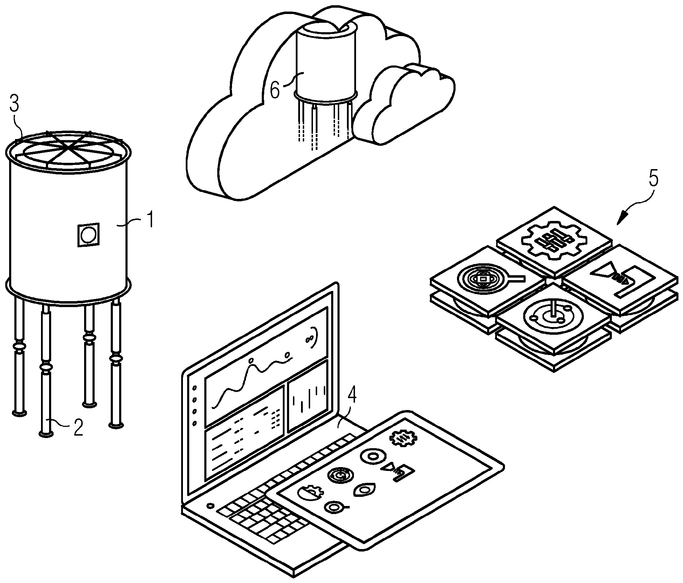

Die Erfindung wird anhand eines in der Figur dargestellten Ausführungsbeispiels näher erläutert.

Die in der Figur beispielhaft dargestellte Luftdrosselspule 1 umfasst in herkömmlicher Weise konzentrische, elektrisch parallelgeschaltete Wicklungslagen, welche durch Abstandhalter voneinander beabstandet sind, sodass dazwischen Kühlungsluftspalte gebildet werden.

Die Wicklungslagen werden an ihren oberen und unteren Enden von mehrarmigen Haltesternen zusammengehalten, welche über Spannbänder gegeneinander gespannt sind. Die Leiter der Wicklungslagen sind mit den Haltesternen elektrisch verbunden und letztere weisen Anschlußfahnen auf, welche die Anschlüsse der Luftdrosselspule 1 bilden.

Die Luftdrosselspule 1 ist in vertikal stehender Lage über Isolatoren 2 und Bodenbefestigungselementen gegen Erde abgestützt. Im Betrieb liegt die Luftdrosselspule auf hohem elektrischen Potential gegenüber Erde, beispielsweise 500 bis 800 kV, und führt einen Strom von bis zu einigen Kiloampere. Der Spannungsabfall über die Luftdrosselspule 1, d.h. zwischen ihren Anschlüssen, ist im Vergleich dazu gering und entspricht dem Spannungsabfall durch die Impedanz bei der jeweiligen Frequenz der Betriebsströme, in der Regel einige Kilovolt.

Das dadurch entstehende elektromagnetische Wechselfeld wird mittels Spule, Gleichrichterelement und Speicherelement dazu genutzt, die elektrische Energieversorgung für eine Wärmebildkamera und ein Funkmodul auf Basis eines Funknetzstandards gemäß IEEE-802.11 oder GSM Netzes gemäß 3GPP zur berührungslosen Datenübertragung zu gewährleisten.

Damit ist eine dauerhafte, wartungsfreie und zuverlässige Versorgung gegeben.

Die Wärmebildkamera ist an der Oberseite der Luftdrosselspule an einem Haltestern befestigt und auf das Innere der Spule gerichtet. Es kann zweckmäßig sein, mehrere Wärmebildkameras mit unterschiedlicher Ausrichtung vorzusehen.

Für zuverlässige Messergebnisse ist es erforderlich, dass vorab die Emissionsgrade der Spulenkomponenten ermittelt werden und Reflexion von Fremdstrahlung vermieden wird.

Bei Minimierung aller störenden Einflüsse sind Messgenauigkeiten bzw. Kontraste bis herab zu Temperaturdifferenzen von 0,1 K möglich.

Wie in der Figur schematisch dargestellt, kann das Temperaturmesssystem in ein SCADA-System 4 oder ein cloud-basiertes Datenbanksystem eingebunden sein und kann auch als Basis für die weitere Datenverarbeitung auf Basis von cloudbasierten Technologien dienen, die als Internet der Dinge (Internet of Things IOT) bekannt sind. Als IoT-Betriebssystem eignet sich dafür im Besonderen MindSphere von Siemens, aber auch AWS und Azure Plattformen oder Ähnliches, das es ermöglicht, die Fülle von Daten aus dem Internet der Dinge mit umfangreichen Anwendungen 5 zu nutzen.

Dabei wird die physikalische Luftdrosselspule mit einer virtuellen Repräsentation, dem "Digitalen Zwilling" 6 verknüpft, die mit dem Temperaturmesssystem ermittelten Informationen werden erfasst, mit weiteren relevanten Informationen verknüpft und im Netzwerk verfügbar gemacht.

Der Einsatz und die Nutzung des digitalen Zwillings 6 bringen eine Reihe von Vorteilen mit sich.

Er kann dazu dienen, Betriebsdaten der Luftdrosselspule zu analysieren und auszuwerten. Er kann aber auch als Designmodell künftiger Drosselspulen verwendet werden oder dazu, das Verhalten, die Funktionalität und Qualität der realen Luftdrosselspule 1 unter jedem relevanten Aspekt zu simulieren.

Dieser Wert kann für alle Teile der Wertschöpfung über den gesamten Lebenszyklus genutzt werden.

Der digitaler Zwilling 6 kann unterschiedliche Formen aufweisen. Er kann zum Beispiel auf einem Verhaltensmodell der Systementwicklung, einem 3D-Modell oder einem Funktionsmodell aufbauen, das mechanische, elektrische und andere Eigenschaften und Leistungsmerkmale der realen Spule im Lauf einer modellbasierten Ausgestaltung möglichst realistisch und umfassend abbildet.

Die unterschiedlichen digitalen Zwillinge 6 können miteinander verknüpft sein und auch eine umfangreiche Kommunikation und Interaktion mit den realen Spulen erlauben. Dann spricht man von einem digitalen Faden (digital thread), der sich durch den gesamten Produktlebenszyklus ziehen und noch weitere produktrelevante Informationen einschließen kann. Den größten Nutzen hat ein Unternehmen tatsächlich von solch einem durchgängigen digital thread. Er erlaubt die Optimierung über verschiedene Wertschöpfungsprozesse hinweg und die Ausschöpfung der größten Palette von Möglichkeiten für digitale Geschäftsmodelle und über Produkte angebotene Dienstleistungen.

Durch die Kombination physikbasierter Simulationen mit Datenanalysen in einer vollständig virtuellen Umgebung führt der digitale Zwilling zu neuen Erkenntnissen. Da weniger reale Prototypen nötig sind, lassen sich Innovationen schneller und zuverlässiger einführen.

### Bezugszeichenliste

- 1: Luftdrosselspule
- 2: Isolatoren
- 3: Oberseite der Luftdrosselspule
- 4: SCADA System oder cloud basiertes System
- 5: Anwendungen
- 6: Digitaler Zwilling

## Patentansprüche

1. Luftdrosselspule (1) mit Temperaturmesssystem, wobei an der Luftdrosselspule (1) ein thermografischer Sensor, Mittel zur Gewinnung elektrischer Energie aus dem elektromagnetischen Feld der Luftdrosselspule und Mittel zur berührungslosen Datenübertragung des Temperaturmesssystems angeordnet sind, wobei das Temperaturmesssystem so eingerichtet ist, dass eine Überwachung und Steuerung der Luftdrosselspule erfolgt und dass auf Basis der ermittelten Infrarotbilder des thermografischen Sensors mittels Simulation eine voraussichtliche Restlebensdauer der Luftdrosselspule und ein Vorschlag für einen Austauschtermin ermittelt wird.

2. Luftdrosselspule nach Anspruch 1, **dadurch gekennzeichnet, dass** als thermografischer Sensor eine Wärmebildkamera vorgesehen ist.

3. Luftdrosselspule nach Anspruch 1 oder 2, **dadurch gekennzeichnet, dass** der thermografische Sensor auf der Oberseite der Luftdrosselspule (1) angeordnet ist.

4. Luftdrosselspule nach einem der Ansprüche 1 bis 3, **dadurch gekennzeichnet, dass** die Mittel zur Gewinnung elektrischer Energie aus dem elektromagnetischen Feld der Luftdrosselspule eine Spule, ein Gleichrichterelement und ein Speicherelement umfassen.

5. Luftdrosselspule nach einem der Ansprüche 1 bis 4, **dadurch gekennzeichnet, dass** die Mittel zur berührungslosen Datenübertragung auf einem Funknetzstandard gemäß IEEE-802.11 beruhen.

6. Luftdrosselspule nach einem der Ansprüche 1 bis 4, **dadurch gekennzeichnet, dass** die Mittel zur berührungslosen Datenübertragung auf einem Mobilfunkstandard gemäß 3GPP beruhen.

7. Luftdrosselspule nach einem der Ansprüche 1 bis 4, **dadurch gekennzeichnet, dass** das Temperaturmesssystem in ein SCADA-System einbindbar ist.

8. Luftdrosselspule nach einem der Ansprüche 1 bis 4, **dadurch gekennzeichnet, dass** das Temperaturmesssystem in ein cloud-basiertes Datenbanksystem einbindbar ist.

9. Verfahren zum Betrieb einer Luftdrosselspule mit Temperaturmesssystem nach Anspruch 1, **dadurch gekennzeichnet, dass** eine Überwachung und Steuerung der Luftdrosselspule erfolgt und dass auf Basis der ermittelten Infrarotbilder des thermographischen Sensors mittels Simulation eine voraussichtliche Restlebensdauer der Luftdrosselspule und ein Vorschlag für einen Austauschtermin ermittelt wird.

10. Verfahren zum Betrieb einer Luftdrosselspule nach Anspruch 9, **dadurch gekennzeichnet, dass** die Daten der ermittelten Infrarotbilder in eine virtuelle, digitale Repräsentanz (6) der Luftdrosselspule eingefügt werden.

## Claims

1. Air-core inductor (1) with a temperature measurement system, wherein a thermographic sensor, means for obtaining electrical energy from the electromagnetic field of the air-core inductor and means for contactless data transfer of the temperature measurement system are arranged on the air-core inductor (1), wherein the temperature measurement system is configured such that monitoring and control of the air-core inductor are effected and that on the basis of the determined infrared images of the thermographic sensor, by means of simulation, an expected remaining service life of the air-core inductor and a proposal for an exchange date are determined.

2. Air-core inductor according to Claim 1, **characterized in that** a thermal imaging camera is provided as the thermographic sensor.

3. Air-core inductor according to Claim 1 or 2, **characterized in that** the thermographic sensor is arranged on the top side of the air-core inductor (1).

4. Air-core inductor according to any of Claims 1 to 3, **characterized in that** the means for obtaining electrical energy from the electromagnetic field of the air-core inductor comprise a coil, a rectifier element and a storage element.

5. Air-core inductor according to any of Claims 1 to 4, **characterized in that** the means for contactless data transfer are based on a radio network standard in accordance with IEEE-802.11.

6. Air-core inductor according to any of Claims 1 to 4, **characterized in that** the means for contactless data transfer are based on a mobile radio standard in accordance with 3GPP.

7. Air-core inductor according to any of Claims 1 to 4, **characterized in that** the temperature measurement system is linkable into a SCADA system.

8. Air-core inductor according to any of Claims 1 to 4, **characterized in that** the temperature measurement system is linkable into a cloud-based database system.

9. Method for operating an air-core inductor with a temperature measurement system according to Claim 1, **characterized in that** monitoring and control of the air-core inductor are effected and **in that** on the basis of the determined infrared images of the thermographic sensor, by means of simulation, an expected remaining service life of the air-core inductor and a proposal for an exchange date are determined.

10. Method for operating an air-core inductor according to Claim 9, **characterized in that** the data of the infrared images determined are inserted into a virtual, digital representation (6) of the air-core inductor (1).

## Revendications

1. Bobine (1) d'induction à air ayant un système de mesure de la température, dans laquelle, sur la bobine (1) d'induction à air sont montés un capteur thermographique, des moyens d'obtention d'énergie électrique à partir du champ électromagnétique de la bobine d'induction à air et des moyens de transfert de données sans contact du système de mesure de la température, dans laquelle le système de mesure de la température est agencé de manière à effectuer un contrôle et une commande de la bobine d'induction à air et de manière à déterminer, sur la base des images infrarouges déterminées du capteur thermographique au moyen d'une simulation, une durée de vie restante probable de la bobine d'induction à air et une proposition d'une date de remplacement.

2. Bobine d'induction à air suivant la revendication 1, **caractérisée en ce qu'**il est prévu une caméra à images thermiques comme capteur thermographique.

3. Bobine d'induction à air suivant la revendication 1 ou 2, **caractérisée en ce que** le capteur thermographique est monté du côté supérieur de la bobine (1) d'induction à air.

4. Bobine d'induction à air suivant l'une des revendications 1 à 3, **caractérisée en ce que** les moyens d'obtention d'énergie électrique, à partir du champ électrique de la bobine d'induction à air, comprennent une bobine, un élément redresseur et un élément accumulateur.

5. Bobine d'induction à air suivant l'une des revendications 1 à 4, **caractérisée en ce que** les moyens de transfert de données sans contact reposent sur une norme de réseau radio suivant IEEE-802.11.

6. Bobine d'induction à air suivant l'une des revendications 1 à 4, **caractérisée en ce que** les moyens de transfert de données sans contact reposent une norme de téléphonie mobile suivant 3GPP.

7. Bobine d'induction à air suivant l'une des revendications 1 à 4, **caractérisée en ce que** le système de mesure de la température peut être incorporé dans un système SCADA.

8. Bobine d'induction à air suivant l'une des revendications 1 à 4, **caractérisée en ce que** le système de mesure de la température peut être incorporé dans un système de base de données reposant sur le nuage.

9. Procédé pour faire fonctionner une bobine d'induction à air comprenant un système de mesure de température suivant la revendication 1, **caractérisé en ce que** l'on effectue un contrôle et une commande de la bobine d'induction à air et **en ce que** l'on détermine, sur la base des images infrarouges déterminées du capteur thermographique au moyen d'une simulation, une durée de vie restante probable de la bobine d'induction à air et une proposition d'une date de remplacement.

10. Procédé pour faire fonctionner une bobine d'induction à air suivant la revendication 9, **caractérisé en ce que** l'on insère les données des images infrarouges déterminées dans une représentation (6) numérique virtuelle de la bobine (1) d'induction à air.
